# EUROPEAN PATENT APPLICATION

(11) **EP 4 472 121 A1**
(43) Date of publication of application: **04.12.2024**
(21) Application number: 23759280.3
(22) Date of filing: 24.02.2023
(51) Int. Cl.: H04L 5/00

(54) **COMMUNICATION METHODS, NETWORK DEVICE AND TERMINAL DEVICE**

(30) Priority: 25.02.2022 CN 202210175768
(71) Applicant: Huawei Technologies Co., Ltd., Shenzhen, Guangdong 518129 (CN)
(72) Inventor: HU, Jinna, Shenzhen, Guangdong 518129 (CN); MA, Chuan, Shenzhen, Guangdong 518129 (CN)
(74) Representative: Körber, Martin Hans
(86) International application number: PCT/CN2023/078202
(87) International publication number: WO 2023/160658

(57) **Abstract**

This application relates to a communication method, a network device, and a terminal device. The method includes: A first network device generates system information, where the system information includes a first indication, the first indication indicates periodicities of a plurality of groups of downlink common signals from the first network device, and all groups of the plurality of groups of downlink common signals have different periodicities. The first network device broadcasts the system information. The method further includes: A terminal device receives the system information from the first network device. The terminal device determines the periodicities of the plurality of groups of downlink common signals from the first network device based on the first indication. In this way, it can be convenient to receive the downlink common signals with the different periodicities.

## Description

### CROSS-REFERENCE TO RELATED APPLICATIONS

This application claims priority to Chinese Patent Application No. 202210175768.7, filed on February 25, 2022, and entitled "COMMUNICATION METHOD, NETWORK DEVICE, AND TERMINAL DEVICE".

### TECHNICAL FIELD

This application relates to the communication field, and more specifically, to a communication method for transmitting a common signal, a network device, and a terminal device.

### BACKGROUND

Synchronization signal and physical broadcast channel blocks (synchronization signal and physical broadcast channel blocks, SSBs) are important common signals in a new radio (new radio, NR) communication system. A periodicity of an SSB can be prolonged during light load or no load, to save energy. Usually, within one SSB periodicity, a plurality of SSBs are carried on beams in different directions for sending. If a cell-level adjustment is performed on periodicities of the SSBs, that is, the periodicities of the SSBs carried on the beams in the different directions remain the same, when the periodicity is adjusted to be greater than default 20 ms, access of a terminal device fails.

The terminal device may alternatively miss SSBs carried on other beams. This may not be conducive to beam application in some scenarios. For example, this may result in an incorrect cell signal quality estimation, affecting a result of cell selection or reselection. If a default search periodicity of the terminal device is directly prolonged, cell search efficiency is affected.

### SUMMARY

Embodiments of the present disclosure provide an improved communication solution, to resolve the foregoing and other potential problems.

As described above, a beam-level adjustment performed on periodicities of SSBs is considered, that is, the SSBs carried on beams in different directions have different periodicities. In this way, the periodicities of the SSBs can be adjusted at a finer granularity, so that SSB overheads are reduced and a probability of symbol power saving is increased, thereby saving energy. When the beam-level adjustment is performed on the periodicities of the SSBs, periodicities of SSBs carried on some beams may be less than a default search periodicity, so that a terminal device can discover a cell.

According to a first aspect of embodiments of the present disclosure, a communication method is provided. The method includes: A first network device generates system information, where the system information includes a first indication, the first indication indicates periodicities of a plurality of groups of downlink common signals from the first network device, and all groups of the plurality of groups of downlink common signals have different periodicities. The first network device broadcasts the system information. In this way, the periodicities of the plurality of groups of downlink common signals from a current cell may be notified, to facilitate receiving of the downlink common signals with the different periodicities.

In some embodiments, the system information may further include a first parameter set, the first parameter set indicates a condition for adjusting a first time window, and the first time window is used by a terminal device to receive the downlink common signals from the first network device at a frequency in a first frequency set. In this way, it can be convenient to adjust the first time window.

According to a second aspect of embodiments of the present disclosure, a communication method is provided. The method includes: A first network device generates system information, where the system information includes a second indication, the second indication indicates different periodicities of a plurality of groups of downlink common signals from a second network device, and all groups of the plurality of groups of downlink common signals have the different periodicities. The first network device broadcasts the system information. In this way, the periodicities of the plurality of groups of downlink common signals from a neighboring cell may be notified, to facilitate receiving of the downlink common signals with the different periodicities from the neighboring cell.

In some embodiments, the system information may further include a second parameter set, the second parameter set indicates a condition for adjusting a second time window, and the second time window is used by a terminal device to receive the downlink common signals from the second network device at a frequency in a second frequency set. In this way, it can be convenient to adjust the second time window.

According to a third aspect of embodiments of the present disclosure, a communication method is provided. The method includes: A terminal device receives system information from a first network device, where the system information includes a first indication, the first indication indicates periodicities of a plurality of groups of downlink common signals from the first network device, and all groups of the plurality of groups of downlink common signals have different periodicities. The terminal device determines the periodicities of the plurality of groups of downlink common signals from the first network device based on the first indication. In this way, the periodicities of the plurality of groups of downlink common signals from a current cell may be determined, to facilitate receiving of the downlink common signals with the different periodicities.

In some embodiments, the method may further include: The terminal device adjusts a first time window based on the determined periodicities, where the first time window is used to receive the downlink common signals from the first network device at a frequency in a first frequency set. The terminal device receives, at a first frequency by using the adjusted first time window, one or more groups of downlink common signals that are not received by the terminal device in the plurality of groups of downlink common signals. In this way, the downlink common signals with the different periodicities from the current cell can be received.

In some embodiments, the terminal device may adjust the first time window by setting the first time window for the first frequency to a maximum value in the periodicities of the plurality of groups of downlink common signals. In this way, it can be ensured that the plurality of groups of downlink common signals from the current cell are received.

In some embodiments, the method may further include: In response to receiving the one or more groups of downlink common signals, the terminal device stops receiving the downlink common signals from the first network device at the first frequency. In this way, overheads for receiving the downlink common signals can be reduced, and communication efficiency can be improved.

In some embodiments, the method may further include: The terminal device measures the plurality of groups of received downlink common signals. The terminal device performs cell selection based on a result of the measurement. In this way, the cell selection can be efficiently and correctly implemented.

In some embodiments, the method may further include: The terminal device receives the downlink common signals from the first network device at the frequency in the first frequency set by using the first time window. In response to receiving the downlink common signals from the first network device at the first frequency in the first frequency set, the terminal device determines whether to adjust the first time window. In this way, whether to adjust the first time window is determined only at the first frequency at which the first network device sends the downlink common signals, so that impact of the adjustment of the first time window on a latency (for example, a latency of cell measurement) of application of the downlink common signals is improved.

In some embodiments, the system information may further include a first parameter set, and the first parameter set indicates a condition for adjusting the first time window. In these embodiments, the terminal device may determine, based on the first parameter set, whether the condition for adjusting the first time window is met; and if the condition for adjusting the first time window is met, determine to adjust the first time window. In this way, impact of the adjustment of the first time window on a latency (for example, a latency of cell measurement) of application of the downlink common signals can be further improved.

According to a fourth aspect of embodiments of the present disclosure, a communication method is provided. The method includes: A terminal device receives at least one of first system information from a first network device and second system information from a second network device, where the first system information includes a second indication, the second system information includes a third indication, each of the second indication and the third indication indicates periodicities of a plurality of groups of downlink common signals from the second network device, and all groups of the plurality of groups of downlink common signals have different periodicities. The terminal device determines the periodicities of the plurality of groups of downlink common signals from the second network device based on at least one of the second indication and the third indication. In this way, the periodicities of the plurality of groups of downlink common signals from a neighboring cell may be determined, to facilitate receiving of the downlink common signals with the different periodicities from the neighboring cell.

In some embodiments, the method may further include: The terminal device initializes a second time window to a minimum value in the periodicities of the plurality of groups of downlink common signals based on the second indication, where the second time window is used by the terminal device to receive the downlink common signals from the second network device at a frequency in a second frequency set. The terminal device receives the downlink common signals from the second network device at the frequency in the second frequency set by using the initialized second time window. In this way, the frequency, in the second frequency set at which the neighboring cell sends the downlink common signals can be quickly searched for.

In some embodiments, the method may further include: The terminal device adjusts a second time window based on the determined periodicities, where the second time window is used by the terminal device to receive the downlink common signals from the second network device at a frequency in a second frequency set. The terminal device receives, at a second frequency by using the adjusted second time window, one or more groups of downlink common signals that are not received by the terminal device in the plurality of groups of downlink common signals. In this way, the downlink common signals with the different periodicities from the neighboring cell can be received.

In some embodiments, the terminal device receives the downlink common signals from the second network device at the frequency in the second frequency set by using the second time window. In response to receiving the downlink common signals from the second network device at the second frequency in the second frequency set, the terminal device determines whether to adjust the second time window. In this way, whether to adjust the second time window is determined only at the second frequency at which the second network device sends the downlink common signals, so that impact of the adjustment of the second time window on a latency (for example, a latency of cell measurement) of application of the downlink common signals is improved.

In some embodiments, the first system information may further include a second parameter set, and the second parameter set indicates a condition for adjusting the second time window. In these embodiments, the terminal device may determine, based on the second parameter set, whether the condition for adjusting the second time window is met; and if the condition for adjusting the second time window is met, determine to adjust the second time window. In this way, impact of the adjustment of the second time window on a latency (for example, a latency of cell measurement) of application of the downlink common signals can be further improved.

In some embodiments, the second system information may further include a third parameter set, and the third parameter set indicates a condition for adjusting the second time window. In these embodiments, the terminal device may determine, based on the third parameter set, whether the condition for adjusting the second time window is met; and if the condition for adjusting the second time window is met, determine to adjust the second time window. In this way, impact of the adjustment of the second time window on a latency (for example, a latency of cell measurement) of application of the downlink common signals can be further improved.

In some embodiments, the terminal device may adjust the second time window by setting the second time window for the second frequency to a maximum value in the periodicities of the plurality of groups of downlink common signals. In this way, it can be ensured that the plurality of groups of downlink common signals from the neighboring cell are received.

In some embodiments, the method may further include: In response to receiving the one or more groups of downlink common signals, the terminal device stops receiving the downlink common signals from the second network device at the second frequency. In this way, overheads for receiving the downlink common signals from the neighboring cell can be reduced, and communication efficiency can be improved.

In some embodiments, the method may further include: The terminal device measures the plurality of groups of received downlink common signals. The terminal device performs cell reselection based on a result of the measurement. In this way, cell selection can be efficiently and correctly implemented.

In some embodiments, the downlink common signal may include at least one of the following: a primary synchronization signal, a secondary synchronization signal, a physical broadcast channel signal, or a demodulation reference signal for a physical broadcast channel.

According to a fifth aspect of embodiments of the present disclosure, a network device is provided. The network device includes: a processor, configured to generate system information, where the system information includes a first indication, the first indication indicates periodicities of a plurality of groups of downlink common signals from the network device, and all groups of the plurality of groups of downlink common signals have different periodicities; and a transmitter, configured to broadcast the system information. In this way, the periodicities of the plurality of groups of downlink common signals from a current cell may be notified.

In some embodiments, the system information may further include a first parameter set, the first parameter set indicates a condition for adjusting a first time window, and the first time window is used by a terminal device to receive the downlink common signals from the first network device at a frequency in a first frequency set. In this way, it can be convenient to adjust the first time window.

According to a sixth aspect of embodiments of the present disclosure, a network device is provided. The network device includes: a processor, configured to generate system information, where the system information includes a second indication, the second indication indicates periodicities of a plurality of groups of downlink common signals from another network device, and all groups of the plurality of groups of downlink common signals have different periodicities; and a transmitter, configured to broadcast the system information. In this way, the periodicities of the plurality of groups of downlink common signals from a neighboring cell may be notified.

In some embodiments, the system information may further include a second parameter set, the second parameter set indicates a condition for adjusting a second time window, and the second time window is used by a terminal device to receive the downlink common signals from the second network device at a frequency in a second frequency set. In this way, it can be convenient to adjust the second time window.

According to a seventh aspect of embodiments of the present disclosure, a terminal device is provided. The terminal device includes: a receiver, configured to receive system information from a network device, where the system information includes a first indication, the first indication indicates periodicities of a plurality of groups of downlink common signals from the network device, and all groups of the plurality of groups of downlink common signals have different periodicities; and a processor, configured to determine the periodicities of the plurality of groups of downlink common signals from the network device based on the first indication. In this way, the periodicities of the plurality of groups of downlink common signals from a current cell may be determined.

In some embodiments, the processor may be further configured to adjust a first time window based on the determined periodicities, where the first time window is used to receive the downlink common signals from the first network device at a frequency in a first frequency set. The receiver may be further configured to receive, at a first frequency by using the adjusted first time window, one or more groups of downlink common signals that are not received by the terminal device in the plurality of groups of downlink common signals. In this way, the downlink common signals with the different periodicities from the current cell can be received.

In some embodiments, the processor may be configured to adjust the first time window by setting the first time window for the first frequency to a maximum value in the periodicities of the plurality of groups of downlink common signals. In this way, it can be ensured that the plurality of groups of downlink common signals from the current cell are received.

In some embodiments, the processor may be configured to in response to receiving the one or more groups of downlink common signals, stop receiving the downlink common signals from the first network device at the first frequency. In this way, overheads for receiving the downlink common signals can be reduced, and communication efficiency can be improved.

In some embodiments, the processor may be configured to: measure the plurality of groups of received downlink common signals; and perform cell selection based on a result of the measurement. In this way, the cell selection can be efficiently and correctly implemented.

In some embodiments, the receiver may be further configured to receive the downlink common signals from the first network device at the frequency in the first frequency set by using the first time window. The processor may be further configured to: in response to receiving the downlink common signals from the first network device at the first frequency in the first frequency set, determine, for the terminal device, whether to adjust the first time window. In this way, whether to adjust the first time window is determined only at the first frequency at which the first network device sends the downlink common signals, so that impact of the adjustment of the first time window on a latency (for example, a latency of cell measurement) of application of the downlink common signals is improved.

In some embodiments, the system information may further include a first parameter set, and the first parameter set indicates a condition for adjusting the first time window. In these embodiments, the processor may be configured to: determine, based on the first parameter set, whether the condition for adjusting the first time window is met; and if the condition for adjusting the first time window is met, determine to adjust the first time window. In this way, impact of the adjustment of the first time window on a latency (for example, a latency of cell measurement) of application of the downlink common signals can be further improved.

According to an eighth aspect of embodiments of the present disclosure, a terminal device is provided. The terminal device includes: a receiver, configured to receive at least one of first system information from a first network device and second system information from a second network device, where the first system information includes a second indication, the second system information includes a third indication, each of the second indication and the third indication indicates periodicities of a plurality of groups of downlink common signals from the second network device, and all groups of the plurality of groups of downlink common signals have different periodicities; and a processor, configured to determine the periodicities of the plurality of groups of downlink common signals from the second network device based on at least one of the second indication and the third indication. In this way, the periodicities of the plurality of groups of downlink common signals from a neighboring cell may be determined.

In some embodiments, the processor may be further configured to initialize, for the terminal device, a second time window to a minimum value in the periodicities of the plurality of groups of downlink common signals based on the second indication, where the second time window is used by the terminal device to receive the downlink common signals from the second network device at a frequency in a second frequency set. The receiver may be further configured to receive the downlink common signals from the second network device at the frequency in the second frequency set by using the initialized second time window. In this way, the downlink common signals with the different periodicities from the neighboring cell can be efficiently received.

In some embodiments, the processor may be further configured to adjust, for the terminal device, a second time window based on the determined periodicities, where the second time window is used by the terminal device to receive the downlink common signals from the second network device at a frequency in a second frequency set. The receiver may be further configured to receive, at a second frequency by using the adjusted second time window, one or more groups of downlink common signals that are not received by the terminal device in the plurality of groups of downlink common signals. In this way, the downlink common signals with the different periodicities from the neighboring cell can be received.

In some embodiments, the receiver may be further configured to receive the downlink common signals from the second network device at the frequency in the second frequency set by using the second time window. The processor may be further configured to: in response to receiving the downlink common signals from the second network device at the second frequency in the second frequency set, determine whether to adjust the second time window. In this way, whether to adjust the second time window is determined only at the second frequency at which the second network device sends the downlink common signals, so that impact of the adjustment of the second time window on a latency (for example, a latency of cell measurement) of application of the downlink common signals is improved.

In some embodiments, the first system information may further include a second parameter set, and the second parameter set indicates a condition for adjusting the second time window. In these embodiments, the processor may be configured to: determine, based on the second parameter set, whether the condition for adjusting the second time window is met; and if the condition for adjusting the second time window is met, determine to adjust the second time window. In this way, impact of the adjustment of the second time window on a latency (for example, a latency of cell measurement) of application of the downlink common signals can be further improved.

In some embodiments, the second system information may further include a third parameter set, and the third parameter set indicates a condition for adjusting the second time window. In these embodiments, the processor may be configured to: determine, based on the third parameter set, whether the condition for adjusting the second time window is met; and if the condition for adjusting the second time window is met, determine to adjust the second time window. In this way, impact of the adjustment of the second time window on a latency (for example, a latency of cell measurement) of application of the downlink common signals can be further improved.

In some embodiments, the processor may be configured to adjust the second time window by setting the second time window for the second frequency to a maximum value in the periodicities of the plurality of groups of downlink common signals. In this way, it can be ensured that the plurality of groups of downlink common signals from the neighboring cell are received.

In some embodiments, the processor may be further configured to: in response to receiving the one or more groups of downlink common signals, stop, for the terminal device, receiving the downlink common signals from the second network device at the second frequency. In this way, overheads for receiving the downlink common signals from the neighboring cell can be reduced, and communication efficiency can be improved.

In some embodiments, the processor may be further configured to: measure, for the terminal device, the plurality of groups of received downlink common signals; and perform, for the terminal device, cell reselection based on a result of the measurement. In this way, cell selection can be efficiently and correctly implemented.

In some embodiments, the downlink common signal may include at least one of the following: a primary synchronization signal, a secondary synchronization signal, a physical broadcast channel signal, or a demodulation reference signal for a physical broadcast channel.

According to a ninth aspect of embodiments of the present disclosure, a network device is provided. The network device includes at least one processor and at least one memory storing computer program code. The at least one memory and the computer program code are configured with the at least one processor to enable the network device to perform the method according to the first aspect or the second aspect.

According to a tenth aspect of embodiments of the present disclosure, a terminal device is provided. The terminal device includes at least one processor and at least one memory storing computer program code. The at least one memory and the computer program code are configured with the at least one processor to enable the terminal device to perform the method according to the third aspect or the fourth aspect.

According to an eleventh aspect of embodiments of the present disclosure, a computer-readable storage medium is provided. The computer-readable storage medium includes machine-executable instructions. When the machine-executable instructions are executed by a device, the device is enabled to perform the method according to the first aspect or the second aspect.

According to a twelfth aspect of embodiments of the present disclosure, a computer-readable storage medium is provided. The computer-readable storage medium includes machine-executable instructions. When the machine-executable instructions are executed by a device, the device is enabled to perform the method according to the third aspect or the fourth aspect.

It should be understood from the following descriptions of example embodiments that, according to the technical solutions provided herein, it can be convenient to receive a plurality of groups of downlink common signals with different periodicities at a frequency. In this way, effective application of the downlink common signals, such as cell selection or cell reselection, can be facilitated.

It should be understood that the content described in SUMMARY is not intended to limit key or important features of embodiments of the present disclosure, and is not intended to limit the scope of the present disclosure. Other features of the present disclosure will be readily understood through the following descriptions.

### BRIEF DESCRIPTION OF DRAWINGS

The foregoing and other features, advantages, and aspects of embodiments of the present disclosure become more apparent with reference to the accompanying drawings and the following detailed descriptions. In the accompanying drawings, same or similar reference signs represent same or similar elements.
FIG. 1 is a diagram of an example communication network in which embodiments of the present disclosure may be implemented;
FIG. 2A is a diagram of an example scenario of SSB beam coverage within a cell;
FIG. 2B is a diagram of an example cell-level adjustment performed on periodicities of SSBs in the scenario in FIG. 2A;
FIG. 2C is a diagram of an example beam-level adjustment performed on periodicities of SSBs in the scenario in FIG. 2A;
FIG. 2D is a diagram of another example beam-level adjustment performed on periodicities of SSBs in the scenario in FIG. 2A;
FIG. 3 is a diagram of an example communication process according to an embodiment of the present disclosure;
FIG. 4 is a diagram of another example communication process according to an embodiment of the present disclosure;
FIG. 5 is a flowchart of an example communication method implemented at a network device according to an embodiment of the present disclosure;
FIG. 6 is a flowchart of another example communication method implemented at a network device according to an embodiment of the present disclosure;
FIG. 7 is a flowchart of an example communication method implemented at a terminal device according to an embodiment of the present disclosure;
FIG. 8 is a flowchart of another example communication method implemented at a terminal device according to an embodiment of the present disclosure;
FIG. 9 is a block diagram of an example network device according to an embodiment of the present disclosure;
FIG. 10 is a block diagram of another example network device according to an embodiment of the present disclosure;
FIG. 11 is a block diagram of an example terminal device according to an embodiment of the present disclosure;
FIG. 12 is a block diagram of another example terminal device according to an embodiment of the present disclosure; and
FIG. 13 is a simplified block diagram of a device suitable for implementing embodiments of the present disclosure.

### DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples, but are not intended to limit the protection scope of the present disclosure.

As used herein, the term "including" and variants thereof indicate open inclusion, that is, "including but not limited to". The term "based on" indicates "at least partially based on". The term "an embodiment" indicates "at least one embodiment". The term "another embodiment" indicates "at least one another embodiment". Related definitions of other terms are provided in the following descriptions.

It should be understood that although the terms "first" and "second" may be used herein to describe various elements, these elements should not be limited by these terms. These terms are only used to distinguish one element from another. For example, a first element may be referred to as a second element, and similarly the second element may be referred to as the first element without departing from the scope of the embodiments. As used herein, the term "and/or" includes any and all combinations of one or more of the listed terms.

The term "circuit" used herein refers to one or more of:
(a) a hardware-only circuit implementation (such as an analog-only circuit implementation and/or digital-only circuit implementation);
(b) a combination of a hardware circuit and software, such as (if applicable): (i) a combination of an analog hardware circuit and/or a digital hardware circuit and software/firmware, and (ii) any part of a hardware processor and software (including a digital signal processor, software, and a memory that work together to enable an apparatus to perform various functions); and
(c) a hardware circuit and/or a processor, such as a microprocessor or a part of a microprocessor, which requires software (such as firmware) for operation, but may not have software when software is not required for operation.

The definition of the circuit is applicable to all usage scenarios of the term in this application (including any claim). In another example, the term "circuit" used herein also covers implementations of only a hardware circuit or processor (or a plurality of processors), a part of a hardware circuit or processor, or software or firmware accompanying a hardware circuit or processor. For example, if applicable to a particular claim element, the term "circuit" further covers a baseband integrated circuit, a processor integrated circuit, or a similar integrated circuit in another computing device.

As used in this specification, the term "terminal device" is any device that has a wireless or wired communication capability. Examples of the terminal device include but are limited to customer premises equipment (customer premise equipment, CPE), user equipment (user equipment, UE), a personal computer, a desktop computer, a mobile phone, a cellular phone, a smartphone, a personal digital assistant (personal digital assistant, PDA), a portable computer, a tablet, a wearable device, an internet of things (Internet of things, IoT) device, a machine type communication (machine type communication, MTC) device, a vehicle-mounted device used for vehicle-to-everything (vehicle-to-everything, V2X) (X refers to a pedestrian, a vehicle, or an infrastructure/network) communication, an image capture device such as a digital camera, a game device, a music storage and playback device, or an internet device capable of wireless or wired internet access and browsing.

In addition, the term "network device" is a device that can provide or host a cell or coverage in which a terminal device may perform communication. Examples of the network device include but are not limited to a NodeB (NodeB or NB), an evolved NodeB (eNodeB or eNB), a next generation NodeB (gNB), a transmission reception point (transmission reception point, TRP), a remote radio unit (remote radio unit, RRU), a radio head (radio head, RH), a remote radio head (remote radio head, RRH), or a low power node such as a femto node or a pico node.

In the context of the present disclosure, the term "downlink common signal" is a signal broadcast by a network device. The downlink common signal may include a primary synchronization signal (primary synchronization signal, PSS), a secondary synchronization signal (secondary synchronization signal, SSS), a physical broadcast channel (physical broadcast channel, PBCH) signal, or a demodulation reference signal (demodulation reference signal, DMRS) for a PBCH. The PSS, the SSS, the PBCH signal, and the DMRS for the PBCH may be packaged into a single block, referred to as an SSB. For convenience, the following describes embodiments of the present disclosure by using an example in which the SSB is used as a downlink common signal. However, it should be understood that embodiments of the present disclosure are applicable to existing transmission or transmission to be developed in the future of any suitable downlink common signal, and are not limited to transmission of the SSB.

### Example implementation of an application environment

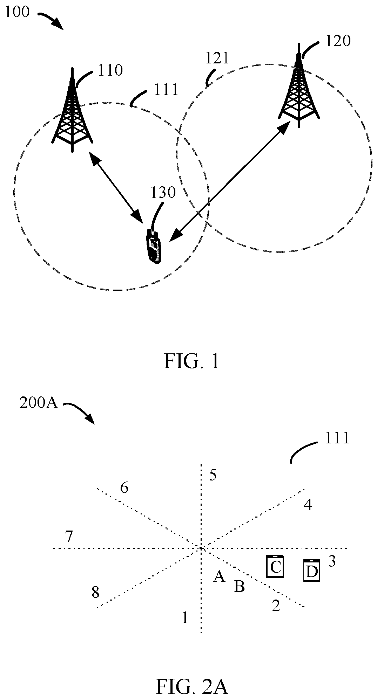

FIG. 1 is a diagram of an example communication network 100 in which embodiments of the present disclosure may be implemented. As shown in FIG. 1, the communication network 100 may include a network device 110, a network device 120, and a terminal device 130. The network device 110 may provide a cell 111 and serve a terminal device within the cell 111. The network device 120 may provide a cell 121 and serve a terminal device within the cell 121. In this example, the terminal device 130 is located within the cell 111, and the network device 110 may serve the terminal device 130.

The network device 110 may communicate with the terminal device 130 through a channel such as a wireless communication channel. Similarly, the network device 120 may alternatively communicate with the terminal device 130 through a channel such as a wireless communication channel. The communication in the communication network 100 may comply with any suitable standard, including but not limited to a global system for mobile communications (global system for mobile communications, GSM), long term evolution (long term evolution, LTE), LTE evolution, LTE advanced (LTE-advanced, LTE-A), wideband code division multiple access (wideband code division multiple access, WCDMA), code division multiple access (code division multiple access, CDMA), a GSM/EDGE radio access network (GSM/EDGE radio access network, GERAN), or MTC. In addition, communication may be performed according to a currently known communication protocol or a communication protocol in any generation to be developed in the future. Examples of the communication protocol include but are not limited to first generation (first generation, 1G), second generation (second generation, 2G), 2.5G, 2.75G, third generation (third generation, 3G), fourth generation (fourth generation, 4G), 4.5G, fifth generation (fifth generation, 5G), or sixth generation (sixth generation, 6G) communication protocol.

It should be understood that a quantity of devices and a quantity of cells in FIG. 1 are provided for the purpose of description, and do not imply any limitation to the present disclosure. The communication network 100 may include any suitable quantity of network devices, any suitable quantity of terminal devices, and/or any suitable quantity of cells that are suitable for implementing the present disclosure. In addition, the communication network 100 may include more additional components that are not shown, or some components that are shown may be omitted. This is not limited in embodiments of the present disclosure. An implementation of the communication network 100 is also not limited to the specific examples described above, but may be implemented in any suitable manner.

In some embodiments, the network devices 110 and 120 may periodically broadcast SSBs. Within one SSB periodicity, a plurality of SSBs may be carried on beams in different directions for sending. FIG. 2A is a diagram 200A of an example scenario of SSB beam coverage within a cell. For convenience, FIG. 2A is described with reference to the example in FIG. 1. As shown in FIG. 2A, within the cell 111, SSBs from the network device 110 may be carried in eight beams 1 to 8 in different directions for sending, to cover the entire cell. In this example, a plurality of terminal devices A, B, C, and D access the cell 111 at locations close to the beams 2 and 3.

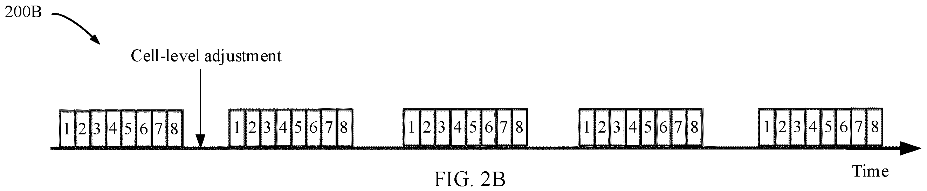

In some embodiments, a cell-level adjustment can be performed on periodicities of SSBs. FIG. 2B is a diagram 200B of an example cell-level adjustment performed on periodicities of SSBs in the scenario in FIG. 2A. As shown in FIG. 2B, the periodicities of the SSBs carried on the beams 1 to 8 are adjusted in a same manner. If load does not meet an SSB periodicity extension condition, the periodicities of the SSBs carried on the beams 1 to 8 remain unchanged.

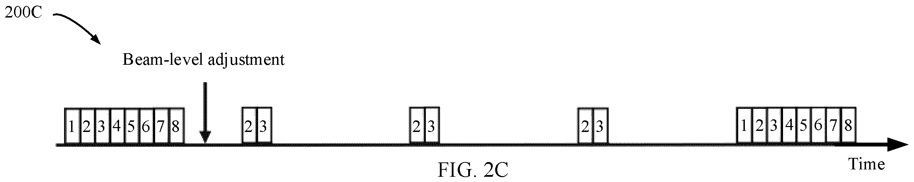

In some embodiments, a beam-level adjustment can be performed on the periodicities of the SSBs. For example, in the beam-level adjustment, periodicities of SSBs carried on beams corresponding to locations at which there is no terminal device or a small quantity of terminal devices may be prolonged based on information such as load statuses and fine locations reported by the terminal devices. FIG. 2C is a diagram 200C of an example beam-level adjustment performed on periodicities of SSBs in the scenario in FIG. 2A. As shown in FIG. 2C, the periodicities of the SSBs carried on the beams 1, 4, 5, 6, 7, and 8 may be prolonged, and the periodicities of the SSBs carried on the beams 2 and 3 remain unchanged.

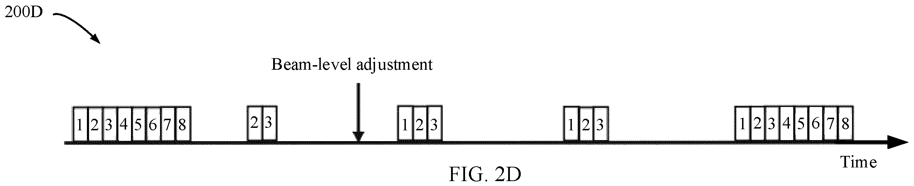

In another example, in the beam-level adjustment, periodicities of SSBs carried on some beams may be adjusted in advance based on information such as load statuses, fine locations reported by the terminal devices, and mobile statuses. FIG. 2D is a diagram 200D of another example beam-level adjustment performed on periodicities of SSBs in the scenario in FIG. 2A. As shown in FIG. 2D, a periodicity of the SSB carried on the beam 1 may be shortened in advance based on mobile information reported by the terminal devices A and B.

The periodicities of the SSBs can be adjusted at a finer granularity through the beam-level adjustment performed on the periodicities of the SSBs, so that SSB overheads are reduced, and a probability of symbol power saving is increased, thereby saving energy.

In some embodiments, the network device 110 may cover the entire cell by using a beam scanning method. To be specific, the network device 110 may send an SSB in a beam direction at a moment, and send SSBs in different beam directions at a plurality of moments, to cover directions needed by the entire cell.

The beam carrying the SSB may be referred to as an SSB beam. The SSB beams in the different directions are sent at the plurality of moments to cover the directions needed by the entire cell. This process is referred to as SSB beam scanning. For example, the network device 110 may periodically send a plurality of SSBs in time domain. Each SSB within one periodicity has a unique number, namely, an SSB index. Each SSB beam corresponds to one SSB index. In frequency domain, each SSB within the cell is configured with a same frequency-domain location. Usually, one SSB refers to one SSB resource block or one SSB beam that corresponds to one SSB index.

In some embodiments, the terminal device 130 may receive SSBs from the network devices 110 and 120. In some embodiments, the terminal device 130 may continuously perform cell search and measurement based on the SSBs, and select a proper SSB beam, to implement initial access and mobility management.

When the beam-level adjustment is performed on the periodicities of the SSBs, periodicities of SSBs carried on some beams may be less than a default search periodicity, so that the terminal device can discover a cell. However, the terminal device may alternatively miss SSBs carried on other beams.

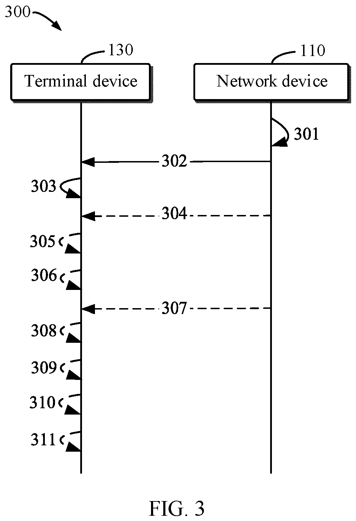

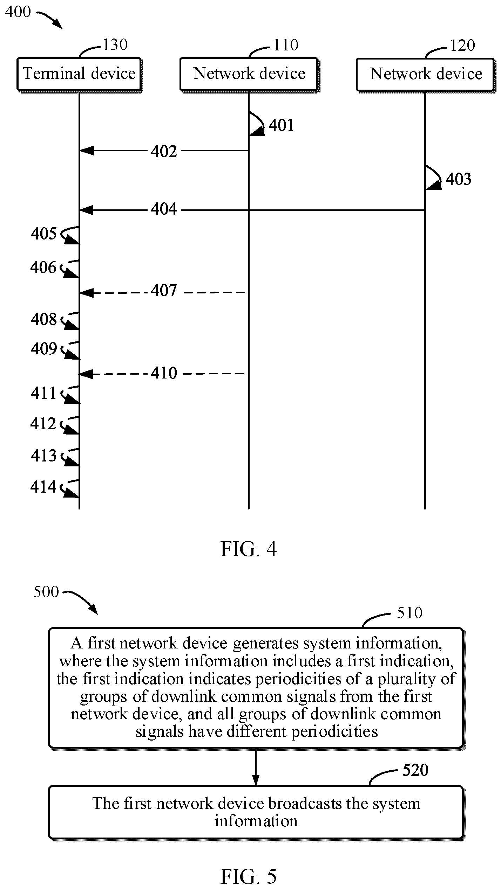

In view of this, embodiments of the present disclosure provide a communication solution for transmitting a downlink common signal (for example, an SSB). In this solution, system information indicates different periodicities associated with a plurality of groups of downlink common signals. In this manner, it can be convenient to determine the different periodicities of the plurality of groups of downlink common signals, so that the plurality of groups of downlink common signals can be efficiently received. For ease of understanding, the following provides detailed descriptions with reference to FIG. 3 and FIG. 4.

### Example implementation of a communication process

FIG. 3 is a diagram of an example communication process 300 according to an embodiment of the present disclosure. For convenience, FIG. 3 is described herein with reference to the examples in FIG. 1 and FIG. 2C. The network device 110 and the terminal device 130 may be used in the process 300. It should be understood that the process in FIG. 3 may include other additional steps that are not shown, or some shown steps may be omitted. The scope of the present disclosure is not limited thereto. It is assumed that the terminal device 130 needs to access a cell.

As shown in FIG. 3, the network device 110 generates 301 system information. In some embodiments, the system information may include a system information block (system information block, SIB). For example, the system information may include a SIB 1, a SIB3, a SIB4, and the like. In some embodiments, the system information may include a master information block (master information block, MIB). Certainly, these system information may alternatively be in another proper form. This is not limited in embodiments of the present disclosure.

In some embodiments, the system information may include a first indication, indicating periodicities of a plurality of groups of downlink common signals from a current cell (namely, the network device 110). All groups of the plurality of groups of downlink common signals have different periodicities. Each group of downlink common signals may include one or more downlink common signals. The downlink common signals in each group of downlink common signals have a same periodicity. In some embodiments, the first indication may include an index set of the downlink common signals in each group of the plurality of groups of downlink common signals and a periodicity corresponding to the index set. In some alternative embodiments, the first indication may include only a set of values of the periodicities.

The following describes, with reference to FIG. 2C, an example in which an SSB is used as the downlink common signal. As shown in FIG. 2C, the SSBs carried on the beams 1, 4, 5, 6, 7, and 8 form a group of downlink common signals, and all have a same periodicity, for example, 80 ms. The downlink common signals carried on the beams 2 and 3 form another group of downlink common signals, and both have a same another periodicity, for example, 20 ms. In this case, for example, the first indication may indicate broadcast periodicities of the SSB beams with different indexes in the current cell. For example, a field may be added to the SIB1 message to indicate that broadcast periodicities of the SSB beams whose indexes are 1, 4, 5, 6, 7, and 8 are 80 ms, and broadcast periodicities of the SSB beams whose indexes are 2 and 3 are 20 ms. It should be understood that the periodicity may be any proper value, and is not limited to the example herein.

In some embodiments, the system information may include a first parameter set, indicating a condition for adjusting a first time window. The first time window may be used by the terminal device to receive the downlink common signals from the current cell (namely, the network device 110) at frequencies in a first frequency set. In other words, the downlink common signals from the network device 110 may appear at these frequencies. The terminal device may scan the downlink common signals at these frequencies within the first time window, to receive the downlink common signals from the network device 110.

In some embodiments, the first parameter set may include a reference signal received power (reference signal received power, RSRP) threshold for extending the first time window. In some embodiments, the first parameter set may include a reference signal received quality (reference signal received quality, RSRQ) threshold for extending the first time window. It should be understood that any other proper parameter is also feasible.

In some embodiments, the system information may include a second indication, indicating periodicities of a plurality of groups of downlink common signals from a neighboring cell (for example, the network device 120). All groups of the plurality of groups of downlink common signals have different periodicities. Each group of downlink common signals may include one or more downlink common signals. The downlink common signals in each group of downlink common signals have a same periodicity. In some embodiments, the second indication may include an index set of the downlink common signals in each group of the plurality of groups of downlink common signals and a periodicity corresponding to the index set. In some alternative embodiments, the second indication may include only a set of values of the periodicities.

In some embodiments, the system information may include a second parameter set, indicating a condition for adjusting a second time window. The second time window may be used by the terminal device to receive the downlink common signals from the neighboring cell (for example, the network device 120) at frequencies in a second frequency set. In other words, the downlink common signals from the network device 120 may appear at these frequencies. The terminal device may scan the downlink common signals at these frequencies within the second time window, to receive the downlink common signals from the network device 120.

In some embodiments, the second parameter set may include an RSRP threshold for extending the second time window. In some embodiments, the second parameter set may include an RSRQ threshold for extending the second time window. It should be understood that any other proper parameter is also feasible.

In some embodiments, the system information may include the first indication and the first parameter set. In some embodiments, the system information may include the second indication and the second parameter set. In some embodiments, the system information may include both the first indication and the second indication. In some embodiments, the system information may include the first indication, the first parameter set, the second indication, and the second parameter set. It should be understood that embodiments of the present disclosure are not limited thereto. The system information according to embodiments of the present disclosure may include any one or any combination of the first indication, the first parameter set, the second indication, and the second parameter set. In addition, the system information may further include any other proper information, for example, access information of the current cell.

Refer to FIG. 3. After generating the system information, the network device 110 broadcasts 302 the system information. Correspondingly, the terminal device 130 may receive the system information. For example, the terminal device 130 may stay for 20 ms at each frequency at which an SSB may exist in each frequency band, and a next frequency is then switched until an SSB signal is detected. The terminal device 130 may obtain a location of system information of a cell based on the detected SSB signal, to obtain the system information. In this example, the system information includes a first indication. The terminal device 130 may determine 303, based on the first indication, periodicities of a plurality of groups of downlink common signals from the network device 110. The terminal device 130 may learn, by using the periodicities, that a beam-level adjustment is performed on the periodicities of the downlink common signals from the network device 110.

In some embodiments, the terminal device 130 may receive 304 the downlink common signals from the network device 110 at a frequency in a first frequency set by using a first time window. If receiving the downlink common signals from the network device 110 at a frequency (also referred to as a first frequency in this specification for convenience) in the first frequency set, the terminal device 130 may determine 305 whether to adjust the first time window.

In some embodiments, the system information may further include a first parameter set. In these embodiments, the terminal device 130 may determine, based on the first parameter set, whether a condition for adjusting the first time window is met. If the condition for adjusting the first time window is met, the terminal device 130 may determine to adjust the first time window. For example, in an embodiment in which the first parameter set includes an RSRP threshold, the terminal device 130 may measure a downlink common signal that is on one or more SSB beams and that is received within 20 ms, to obtain corresponding RSRP. If the RSRP of the received downlink common signal is less than the RSRP threshold, the terminal device 130 may determine to adjust the first time window. If the RSRP of the received downlink common signal is greater than the RSRP threshold, the terminal device 130 may determine not to adjust the first time window. In some embodiments, if the RSRP of the received downlink common signal is equal to the RSRP threshold, the terminal device 130 may determine to adjust the first time window. In some alternative embodiments, if the RSRP of the received downlink common signal is equal to the RSRP threshold, the terminal device 130 may determine not to adjust the first time window. It should be understood that these are merely examples, and embodiments of the present disclosure are not limited thereto.

In some embodiments, if the received downlink common signal is a downlink common signal needed by the terminal device 130, for example, the measurement of the received downlink common signal enables the terminal device 130 to meet a cell access condition, the terminal device 130 may determine not to adjust the first time window. In some embodiments, if the received downlink common signal is not a downlink common signal needed by the terminal device 130, for example, the measurement of the received downlink common signal cannot enable the terminal device 130 to meet a cell access condition, the terminal device 130 may determine to adjust the first time window, to continue receiving a downlink common signal.

In some embodiments, the terminal device 130 may determine, based on the first indication, whether to adjust the first time window. For example, the terminal device 130 may determine indexes of the downlink common signals in the plurality of groups of downlink common signals based on the first indication. If one or more of the determined indexes of the downlink common signals are all included in an index set of the received downlink common signals, the terminal device 130 may determine not to adjust the first time window. If one or more of the determined indexes of the downlink common signals are not included in an index set of the received downlink common signals, the terminal device 130 may determine to adjust the first time window. It should be understood that these are merely examples, and whether to adjust the first time window may alternatively be determined in any other proper manner.

Still refer to FIG. 3. After determining to adjust the first time window, the terminal device 130 may adjust (for example, extend) 306 the first time window based on the determined periodicities, and continue receiving 307, at the first frequency by using the adjusted first time window, one or more groups of downlink common signals that are not received in the plurality of groups of downlink common signals. For example, the terminal device 130 may set the first time window for the first frequency to a maximum value in the periodicities of the plurality of groups of downlink common signals. It should be understood that embodiments of the present disclosure are not limited thereto, and the first time window may alternatively be prolonged based on another periodicity value, to ensure that the needed downlink common signals in the plurality of groups of downlink common signals are received.

In some embodiments, after adjusting the first time window, the terminal device 130 may determine 308 whether the one or more groups of downlink common signals that are not received are received. If receiving the one or more groups of downlink common signals, the terminal device 130 may stop 309 receiving the downlink common signals from the network device 110 at the first frequency. In this way, an unnecessary operation of receiving the downlink common signals can be avoided.

In some embodiments, the terminal device 130 may measure 310 the received downlink common signals, and perform 311 cell selection based on a result of the measurement. For example, the terminal device 130 may measure the plurality of groups of received downlink common signals. If the result of the measurement meets a predetermined condition, the cell 111 provided by the network device 110 may be selected. It should be understood that the cell selection may be implemented in any proper manner. This is not limited in embodiments of the present disclosure.

In this way, the cell may be discovered by using the SSB beams whose periodicities are less than or equal to the default periodicity, and the complete SSB beams, for cell measurement, may be obtained by extending receiving time. Therefore, impact of extending the periodicity for the SSB beams on the cell selection is mitigated when a cell search latency is not significantly increased.

Although the process in FIG. 3 is described above with reference to the network device 110, it should be understood that the process in FIG. 3 is also applicable to the network device 120.

FIG. 4 is a diagram of another example communication process 400 according to an embodiment of the present disclosure. For convenience, FIG. 4 is described herein with reference to the example in FIG. 1. The network devices 110 and 120 and the terminal device 130 may be used in the process 400. It should be understood that the process in FIG. 4 may include other additional steps that are not shown, or some shown steps may be omitted. The scope of the present disclosure is not limited thereto. It is assumed that the terminal device 130 is currently served by the network device 110, and the network device 120 provides a neighboring cell.

As shown in FIG. 4, the network device 110 generates 401 first system information, and broadcasts 402 the first system information. The network device 120 generates 403 second system information, and broadcasts 404 the second system information. In some embodiments, either of the first system information and the second system information may include a SIB, for example, a SIB 1, a SIB3, or a SIB4. In some embodiments, either of the first system information and the second system information may include a MIB. Certainly, these system information may alternatively be in another proper form. This is not limited in embodiments of the present disclosure.

Each of the first system information and the second system information may be generated similar to the system information described with reference to FIG. 3. In some embodiments, the first system information from the network device 110 may include a second indication, indicating periodicities of a plurality of groups of downlink common signals from the neighboring cell (for example, the network device 120). The second system information from the network device 120 may include a third indication, indicating periodicities of a plurality of groups of downlink common signals from a current cell (namely, the network device 120).

In some embodiments, the first system information from the network device 110 may further include a first indication, indicating periodicities of a plurality of groups of downlink common signals from the current cell (namely, the network device 110). In some embodiments, the first system information from the network device 110 may further include a second parameter set, indicating a condition for adjusting a second time window. The second time window is used to receive the downlink common signals from the neighboring cell (namely, the network device 120) at a frequency in the second frequency set. In some embodiments, the first system information from the network device 110 may further include a first parameter set, indicating a condition for adjusting a first time window. The first time window is used to receive the downlink common signals from the current cell (namely, the network device 110) at a frequency in a first frequency set.

In some embodiments, the second system information from the network device 120 may further include a third parameter set, indicating a condition for adjusting a second time window. The second time window is used to receive the downlink common signals from the current cell (namely, the network device 120) at a frequency in a second frequency set. In some embodiments, the second system information from the network device 120 may further include a fourth indication, indicating periodicities of a plurality of groups of downlink common signals from the neighboring cell (for example, the network device 110). In some embodiments, the second system information from the network device 120 may further include a fourth parameter set, indicating a condition for adjusting a third time window. The third time window is used to receive the downlink common signals from the neighboring cell (for example, the network device 110) at the frequency in the first frequency set. It should be understood that the first system information and the second system information may alternatively include any other proper information. This is not limited in embodiments of the present disclosure.

Refer to FIG. 4. The terminal device 130 may receive the first system information and the second system information. In this example, the first system information includes the second indication, and the second system information includes the third indication. The terminal device 130 may determine 405, based on at least one of the second indication and the third indication, the periodicities of the plurality of groups of downlink common signals from the neighboring cell (for example, the network device 120). The terminal device 130 may learn, by using the periodicities, that a beam-level adjustment is performed on the periodicities of the downlink common signals from the network device 120.

In some embodiments, the terminal device 130 may initialize 406 the second time window to a minimum value in the periodicities of the plurality of groups of downlink common signals from the network device 120 based on the second indication in the first system information from the network device 110. The terminal device 130 may receive 407 the downlink common signals from the network device 120 at a frequency in a second frequency set by using the initialized second time window. The downlink common signals from the network device 120 may appear at the frequency in the second frequency set. In this way, the downlink common signals from the neighboring cell can be efficiently received.

If receiving the downlink common signals from the network device 110 at a frequency (also referred to as a second frequency in this specification for convenience) in the second frequency set, the terminal device 130 may determine 408 whether to adjust the second time window.

In some embodiments in which the first system information further includes the second parameter set, the terminal device 130 may determine, based on the second parameter set, whether the condition for adjusting the second time window is met. If the condition for adjusting the second time window is met, the terminal device 130 may determine to adjust the second time window. For example, in an embodiment in which the second parameter set includes an RSRP threshold, the terminal device 130 may measure a downlink common signal that is on one or more SSB beams and that is received within 20 ms, to obtain corresponding RSRP. If the RSRP of the received downlink common signal is less than the RSRP threshold, the terminal device 130 may determine to adjust the second time window. If the RSRP of the received downlink common signal is greater than the RSRP threshold, the terminal device 130 may determine not to adjust the second time window. In some embodiments, if the RSRP of the received downlink common signal is equal to the RSRP threshold, the terminal device 130 may determine to adjust the second time window. In some alternative embodiments, if the RSRP of the received downlink common signal is equal to the RSRP threshold, the terminal device 130 may determine not to adjust the second time window. It should be understood that these are merely examples, and embodiments of the present disclosure are not limited thereto.

In some embodiments in which the second system information further includes the third parameter set, the terminal device 130 may alternatively determine, based on the third parameter set, whether the condition for adjusting the second time window is met. If the condition for adjusting the second time window is met, the terminal device 130 may determine to adjust the second time window. Similar to the foregoing determining based on the second parameter set, whether to adjust the second time window may be determined based on the third parameter set. Details are not described herein again.

In some embodiments, if the received downlink common signal is a downlink common signal needed by the terminal device 130, for example, the measurement of the received downlink common signal enables the terminal device 130 to meet a cell re-access condition, the terminal device 130 may determine not to adjust the second time window. In some embodiments, if the received downlink common signal is not a downlink common signal needed by the terminal device 130, for example, the measurement of the received downlink common signal cannot enable the terminal device 130 to meet a cell re-access condition, the terminal device 130 may determine to adjust the second time window, to continue receiving a downlink common signal from the neighboring cell.

In some embodiments, the terminal device 130 may determine, based on the second indication, whether to adjust the second time window. For example, the terminal device 130 may determine indexes of the downlink common signals in the plurality of groups of downlink common signals from the network device 120 based on the second indication. If one or more of the determined indexes of the downlink common signals are all included in an index set of the received downlink common signals, the terminal device 130 may determine not to adjust the second time window. If one or more of the determined indexes of the downlink common signals are not included in an index set of the received downlink common signals, the terminal device 130 may determine to adjust the second time window. It should be understood that these are merely examples, and whether to adjust the second time window may alternatively be determined in any other proper manner.

Still refer to FIG. 4. After determining to adjust the second time window, the terminal device 130 may adjust (for example, extend) 409 the second time window based on the determined periodicities, and continue receiving 410, at the second frequency by using the adjusted second time window, one or more groups of downlink common signals that are not received in the plurality of groups of downlink common signals. For example, the terminal device 130 may set the second time window for the second frequency to a maximum value in the periodicities of the plurality of groups of downlink common signals. It should be understood that embodiments of the present disclosure are not limited thereto, and the second time window may alternatively be prolonged based on another periodicity value, to ensure that the needed downlink common signals in the plurality of groups of downlink common signals are received.

In some embodiments, after adjusting the first time window, the terminal device 130 may determine 411 whether the one or more groups of downlink common signals that are not received are received. If receiving the one or more groups of downlink common signals, the terminal device 130 may stop 412 receiving the downlink common signals from the network device 110 at the second frequency. In this way, an unnecessary operation of receiving the downlink common signals can be avoided.

In some embodiments, the terminal device 130 may measure 413 the received downlink common signals, and perform 414 cell reselection based on a result of the measurement. For example, the terminal device 130 may measure the plurality of groups of received downlink common signals. If the result of the measurement meets a predetermined condition, the cell 121 provided by the network device 120 may be reselected. It should be understood that the cell reselection may be implemented in any proper manner. This is not limited in embodiments of the present disclosure.

In this way, the neighboring cell may be discovered by using the SSB beams whose periodicities are less than or equal to the default periodicity, and the complete SSB beams, for neighboring cell measurement, may be obtained by extending receiving time. Therefore, impact of extending the periodicity for the SSB beams on the cell reselection is mitigated when a neighboring cell search latency is not significantly increased.

It should be understood that a sequence of the steps in communication processes described above with reference to FIG. 3 and FIG. 4 is merely intended for the purpose of description, and is not intended to be limiting. In addition, these communication processes may include more steps that are not shown, or some shown steps may be omitted, but are not limited to the foregoing descriptions.

### Example implementation of a communication method

Corresponding to the foregoing communication processes, embodiments of the present disclosure provide a communication method implemented at a network device and a communication method implemented at a terminal device. FIG. 5 is a flowchart of an example communication method 500 implemented at a network device according to an embodiment of the present disclosure. The method 500 may be implemented at the network device 110 or 120 in FIG. 1. For convenience, FIG. 5 is described herein with reference to the network device 110 in FIG. 1. It should be understood that the method in FIG. 5 may include other additional steps that are not shown, or some shown steps may be omitted. The scope of the present disclosure is not limited thereto.

As shown in FIG. 5, at a block 510, a first network device (for example, the network device 110) generates system information. The system information includes a first indication, and the first indication indicates periodicities of a plurality of groups of downlink common signals from a current cell (namely, the network device 110). All groups of the plurality of groups of downlink common signals have different periodicities. In this way, a beam-level adjustment performed on the periodicities of the downlink common signals from the current cell may be indicated.

In some embodiments, the system information may further include a first parameter set, and the first parameter set indicates a condition for adjusting a first time window. The first time window may be used by a terminal device to receive the downlink common signals from the current cell (namely, the network device 110) at a frequency in a first frequency set. In this way, receiving time is adjusted, so that it can be ensured that the needed downlink common signals from the current cell are received.

In some embodiments, the system information may further include a second indication, and the second indication indicates periodicities of a plurality of groups of downlink common signals from a neighboring cell (for example, the network device 120). All groups of the plurality of groups of downlink common signals have different periodicities. In this way, the beam-level adjustment performed on the periodicities of the downlink common signals from the neighboring cell may be indicated.

In some embodiments, the system information may further include a second parameter set, and the second parameter set indicates a condition for adjusting a second time window. The second time window may be used by the terminal device to receive the downlink common signals from the neighboring cell (for example, the network device 120) at a frequency in a second frequency set. In this way, receiving time is adjusted, so that it can be ensured that the needed downlink common signals from the neighboring cell are received.

At a block 520, the network device 110 broadcasts the system information.

According to the method 500, the different periodicities of the plurality of groups of downlink common signals from the current cell may be notified, to facilitate receiving of the plurality of groups of downlink common signals.

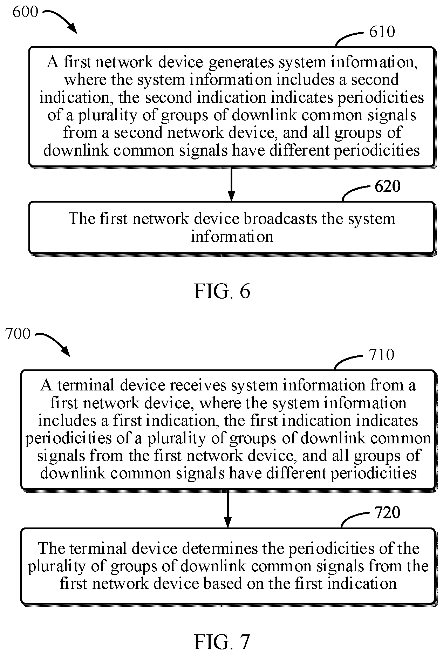

FIG. 6 is a flowchart of another example communication method 600 implemented at a network device according to an embodiment of the present disclosure. The method 600 may be implemented at the network device 110 or 120 in FIG. 1. For convenience, FIG. 6 is described herein with reference to the network device 110 in FIG. 1. It should be understood that the method in FIG. 6 may include other additional steps that are not shown, or some shown steps may be omitted. The scope of the present disclosure is not limited thereto.

As shown in FIG. 6, at a block 610, a first network device (for example, the network device 110) generates system information. The system information includes a second indication, and the second indication indicates periodicities of a plurality of groups of downlink common signals from a neighboring cell (namely, the network device 120). All groups of the plurality of groups of downlink common signals have different periodicities. In this way, a beam-level adjustment performed on the periodicities of the downlink common signals from the neighboring cell may be indicated.

In some embodiments, the system information may further include a second parameter set, and the second parameter set indicates a condition for adjusting a second time window. The second time window may be used by a terminal device to receive the downlink common signals from the neighboring cell (for example, the network device 120) at a frequency in a second frequency set. In this way, receiving time is adjusted, so that it can be ensured that the needed downlink common signals from the neighboring cell are received.

In some embodiments, the system information may further include a first indication, and the first indication indicates periodicities of a plurality of groups of downlink common signals from a current cell (for example, the network device 110). All groups of the plurality of groups of downlink common signals have different periodicities. In this way, the beam-level adjustment performed on the periodicities of the downlink common signals from the current cell may be indicated.

In some embodiments, the system information may further include a first parameter set, and the first parameter set indicates a condition for adjusting a first time window. The first time window may be used by the terminal device to receive the downlink common signals from the current cell (namely, the network device 110) at a frequency in a first frequency set. In this way, receiving time is adjusted, so that it can be ensured that the needed downlink common signals from the current cell are received.

At a block 620, the network device 110 broadcasts the system information.

According to the method 600, the different periodicities of the plurality of groups of downlink common signals from the neighboring cell may be notified, to facilitate receiving of the plurality of groups of downlink common signals.

It should be understood that the methods in FIG. 5 and FIG. 6 may be implemented separately, or may be implemented in any proper combination. This is not limited in embodiments of the present disclosure.

FIG. 7 is a flowchart of an example communication method 700 implemented at a terminal device according to an embodiment of the present disclosure. The method 700 may be implemented at the terminal device 130 in FIG. 1. For convenience, FIG. 7 is described herein with reference to the terminal device 130 in FIG. 1. It should be understood that the method in FIG. 7 may include other additional steps that are not shown, or some shown steps may be omitted. The scope of the present disclosure is not limited thereto.

As shown in FIG. 7, at a block 710, the terminal device 130 receives system information from a first network device (for example, the network device 110). The system information includes a first indication, and the first indication indicates periodicities of a plurality of groups of downlink common signals from the network device 110. All groups of the plurality of groups of downlink common signals have different periodicities.

At a block 720, the terminal device 130 determines the periodicities of the plurality of groups of downlink common signals from the network device 110 based on the first indication. In this way, the terminal device 130 may learn that a beam-level adjustment is performed on the periodicities of the downlink common signals from the network device.

In some embodiments, the terminal device 130 may receive the downlink common signals from the network device 110 at a frequency in a first frequency set by using a first time window. If receiving the downlink common signals from the network device 110 at a first frequency in the first frequency set, the terminal device 130 may determine whether to adjust the first time window.

In some embodiments, the system information may further include a first parameter set, and the first parameter set indicates a condition for adjusting the first time window. In these embodiments, the terminal device 130 may determine, based on the first parameter set, whether the condition for adjusting the first time window is met. If the condition for adjusting the first time window is met, the terminal device 130 determines to adjust the first time window.

In some embodiments, the terminal device 130 may adjust the first time window based on the determined periodicities. For example, the terminal device 130 may set the first time window for the first frequency to a maximum value in the periodicities of the plurality of groups of downlink common signals. In this way, it can be ensured that all the downlink common signals in the plurality of groups of downlink common signals are received. It should be understood that the first time window may alternatively be adjusted in another proper manner. In these embodiments, the terminal device 130 may receive, at a first frequency by using the adjusted first time window, one or more groups of downlink common signals that are not received in the plurality of groups of downlink common signals. In this way, it can be ensured that the needed downlink common signals in the plurality of groups of downlink common signals are received by adjusting the first time window.

In some embodiments, in response to receiving the one or more groups of downlink common signals, the terminal device 130 may stop receiving the downlink common signals from the network device 110 at the first frequency. In this way, overheads for receiving the downlink common signals are reduced, and communication efficiency is improved.

In some embodiments, the terminal device 130 may measure the plurality of groups of received downlink common signals, and perform cell selection based on a result of the measurement. In this way, the cell selection is efficiently and correctly implemented.

In some embodiments, the downlink common signal may include at least one of the following: a PSS, an SSS, a PBCH signal, or a DMRS for a PBCH. For example, the downlink common signal may include an SSB.

According to the method 700, the different periodicities of the plurality of groups of downlink common signals from the current cell may be determined, to facilitate receiving and effective utilization of the plurality of groups of downlink common signals.

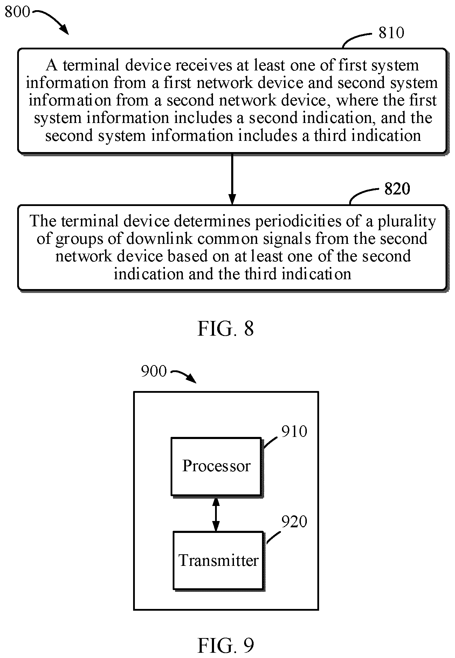

FIG. 8 is a flowchart of another example communication method 800 implemented at a terminal device according to an embodiment of the present disclosure. The method 800 may be implemented at the terminal device 130 in FIG. 1. For convenience, FIG. 8 is described herein with reference to the terminal device 130 in FIG. 1. It should be understood that the method in FIG. 8 may include other additional steps that are not shown, or some shown steps may be omitted. The scope of the present disclosure is not limited thereto.

As shown in FIG. 8, at a block 810, the terminal device 130 receives at least one of first system information from a first network device (for example, the network device 110) and second system information from a second network device (for example, the network device 120). The first system information includes a second indication, the second system information includes a third indication, and the second indication and the third indication each indicate periodicities of a plurality of groups of downlink common signals from the network device 120. All groups of the plurality of groups of downlink common signals have different periodicities.

At a block 820, the terminal device 130 determines the periodicities of the plurality of groups of downlink common signals from the network device 120 based on at least one of the second indication and the third indication. In this way, the terminal device 130 may learn that a beam-level adjustment is performed on the periodicities of the downlink common signals from a neighboring cell.

In some embodiments, the terminal device 130 may initialize, based on the second indication, a second time window to a minimum value in the periodicities of the plurality of groups of downlink common signals. The second time window is used to receive the downlink common signals from the network device 120 at a frequency in a second frequency set. The terminal device 130 may receive the downlink common signals from the network device 120 at the frequency in the second frequency set by using the initialized second time window. In this way, the downlink common signals from the neighboring cell can be efficiently received.

In some embodiments, if receiving the downlink common signals from the network device 120 at a second frequency in the second frequency set, the terminal device 130 may determine whether to adjust the second time window.

In some embodiments, the first system information may further include a second parameter set, and the second parameter set indicates a condition for adjusting the second time window. In these embodiments, the terminal device 130 may determine, based on the second parameter set, whether the condition for adjusting the second time window is met. If the condition for adjusting the second time window is met, the terminal device 130 may determine to adjust the second time window. In this way, the receiving of the downlink common signals from the neighboring cell may be adjusted based on the information from the current cell.

In some embodiments, the second system information may further include a third parameter set, and the third parameter set indicates a condition for adjusting the second time window. In these embodiments, the terminal device 130 may determine, based on the third parameter set, whether the condition for adjusting the second time window is met. If the condition for adjusting the second time window is met, the terminal device 130 may determine to adjust the second time window. In this way, the receiving of the downlink common signals from the neighboring cell may be adjusted based on the information from the neighboring cell.

In some embodiments, the terminal device 130 may adjust the second time window based on the determined periodicities, and receive, at the second frequency by using the adjusted second time window, one or more groups of downlink common signals that are not received in the plurality of groups of downlink common signals. In some embodiments, the terminal device 130 may set the second time window for the second frequency to a maximum value in the periodicities of the plurality of groups of downlink common signals. In this way, it can be ensured that all the downlink common signals in the plurality of groups of downlink common signals are received by extending the second time window.

In some embodiments, if receiving the one or more groups of downlink common signals, the terminal device 130 may stop receiving the downlink common signals from the network device 120 at the second frequency. In this way, overheads for receiving the downlink common signals from the neighboring cell can be reduced.

In some embodiments, the terminal device 130 may measure the plurality of groups of received downlink common signals, and perform cell reselection based on a result of the measurement. In this way, the cell reselection can be efficiently and accurately implemented.

In some embodiments, the downlink common signal may include at least one of the following: a PSS, an SSS, a PBCH signal, or a DMRS for a PBCH. For example, the downlink common signal may include an SSB.

According to the method 800, the different periodicities of the plurality of groups of downlink common signals from the neighboring cell may be determined, to facilitate receiving and effective utilization of the plurality of groups of downlink common signals.

It should be understood that the methods in FIG. 7 and FIG. 8 may be implemented separately, or may be implemented in any proper combination. This is not limited in embodiments of the present disclosure.

### Example implementation of a communication device

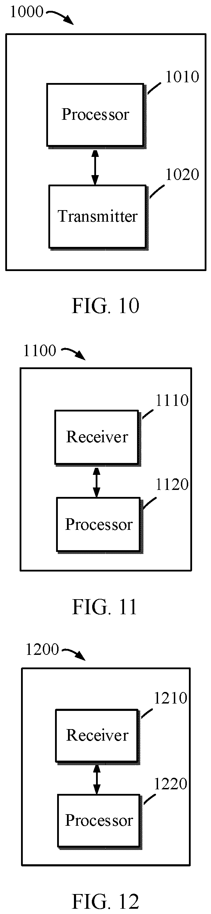

Corresponding to the foregoing methods, embodiments of the present disclosure further provide a terminal device and a network device that can implement these methods. The following describes these with reference to FIG. 9 and FIG. 10.

FIG. 9 is a block diagram of an example network device 900 according to an embodiment of the present disclosure. It should be understood that the block diagram of FIG. 9 is merely intended for the purpose of description, and is not intended to be limiting. A device in FIG. 9 may further include any other suitable additional component.

As shown in FIG. 9, the network device 900 may include a processor 910 and a transmitter 920. The processor 910 may be configured to generate system information, where the system information includes a first indication, the first indication indicates periodicities of a plurality of groups of downlink common signals from the network device, and all groups of the plurality of groups of downlink common signals have different periodicities. The transmitter may be configured to broadcast the system information. In this way, the periodicities of the plurality of groups of downlink common signals from a current cell may be notified.

In some embodiments, the system information may further include a first parameter set, the first parameter set indicates a condition for adjusting a first time window, and the first time window is used by a terminal device to receive the downlink common signals from the first network device at a frequency in a first frequency set. In this way, it can be convenient to adjust the first time window.

FIG. 10 is a block diagram of another example network device 1000 according to an embodiment of the present disclosure. It should be understood that the block diagram of FIG. 10 is merely intended for the purpose of description, and is not intended to be limiting. A device in FIG. 10 may further include any other suitable additional component.

As shown in FIG. 10, the network device 1000 may include a processor 1010 and a transmitter 1020. The processor 1010 may be configured to generate system information, where the system information includes a second indication, the second indication indicates periodicities of a plurality of groups of downlink common signals from another network device, and all groups of the plurality of groups of downlink common signals have different periodicities. The transmitter may be configured to broadcast the system information. In this way, the periodicities of the plurality of groups of downlink common signals from a neighboring cell may be notified.

In some embodiments, the system information may further include a second parameter set, the second parameter set indicates a condition for adjusting a second time window, and the second time window is used by a terminal device to receive the downlink common signals from the second network device at a frequency in a second frequency set. In this way, it can be convenient to adjust the second time window.

FIG. 11 is a block diagram of an example terminal device 1100 according to an embodiment of the present disclosure. It should be understood that the block diagram of FIG. 11 is merely intended for the purpose of description, and is not intended to be limiting. A device in FIG. 11 may further include any other suitable additional component.

As shown in FIG. 11, the terminal device 1100 may include a receiver 1110 and a processor 1120. The receiver 1110 may be configured to receive system information from a network device, where the system information includes a first indication, the first indication indicates periodicities of a plurality of groups of downlink common signals from the network device, and all groups of the plurality of groups of downlink common signals have different periodicities. The processor 1120 may be configured to determine the periodicities of the plurality of groups of downlink common signals from the network device based on the first indication. In this way, the periodicities of the plurality of groups of downlink common signals from a current cell may be determined.

In some embodiments, the processor 1120 may be further configured to adjust a first time window based on the determined periodicities, where the first time window is used to receive the downlink common signals from the first network device at a frequency in a first frequency set. The receiver 1110 may be further configured to receive, at a first frequency by using the adjusted first time window, one or more groups of downlink common signals that are not received by the terminal device in the plurality of groups of downlink common signals. In this way, the downlink common signals with the different periodicities from the current cell can be received.

In some embodiments, the processor 1120 may be configured to adjust the first time window by setting the first time window for the first frequency to a maximum value in the periodicities of the plurality of groups of downlink common signals. In this way, it can be ensured that the plurality of groups of downlink common signals from the current cell are received.

In some embodiments, the processor 1120 may be configured to: in response to receiving the one or more groups of downlink common signals, stop receiving the downlink common signals from the first network device at the first frequency. In this way, overheads for receiving the downlink common signals can be reduced, and communication efficiency can be improved.

In some embodiments, the processor 1120 may be configured to: measure the plurality of groups of received downlink common signals; and perform cell selection based on a result of the measurement. In this way, the cell selection can be efficiently and correctly implemented.

In some embodiments, the receiver 1110 may be further configured to receive the downlink common signals from the first network device at the frequency in the first frequency set by using the first time window. The processor 1120 may be further configured to: in response to receiving the downlink common signals from the first network device at the first frequency in the first frequency set, determine, for the terminal device, whether to adjust the first time window. In this way, whether to adjust the first time window is determined only at the first frequency at which the first network device sends the downlink common signals, so that impact of the adjustment of the first time window on a latency (for example, a latency of cell measurement) of application of the downlink common signals is improved.

In some embodiments, the system information may further include a first parameter set, and the first parameter set indicates a condition for adjusting the first time window. In these embodiments, the processor 1120 may be configured to: determine, based on the first parameter set, whether the condition for adjusting the first time window is met; and if the condition for adjusting the first time window is met, determine to adjust the first time window. In this way, impact of the adjustment of the first time window on a latency (for example, a latency of cell measurement) of application of the downlink common signals can be further improved.

FIG. 12 is a block diagram of an example terminal device 1200 according to an embodiment of the present disclosure. It should be understood that the block diagram of FIG. 12 is merely intended for the purpose of description, and is not intended to be limiting. A device in FIG. 12 may further include any other suitable additional component.

As shown in FIG. 12, the terminal device 1200 may include a receiver 1210 and a processor 1220. The receiver 1210 may be configured to receive at least one of first system information from a first network device and second system information from a second network device, where the first system information includes a second indication, the second system information includes a third indication, each of the second indication and the third indication indicates periodicities of a plurality of groups of downlink common signals from the second network device, and all groups of the plurality of groups of downlink common signals have different periodicities. The processor 1220 may be configured to determine the periodicities of the plurality of groups of downlink common signals from the second network device based on at least one of the second indication and the third indication. In this way, the periodicities of the plurality of groups of downlink common signals from a neighboring cell may be determined.

In some embodiments, the processor 1220 may be further configured to initialize a second time window to a minimum value in the periodicities of the plurality of groups of downlink common signals based on the second indication, where the second time window is used by the terminal device to receive the downlink common signals from the second network device at a frequency in a second frequency set. The receiver 1210 may be further configured to receive the downlink common signals from the second network device at the frequency in the second frequency set by using the initialized second time window. In this way, the downlink common signals from the neighboring cell can be efficiently received.

In some embodiments, the processor 1220 may be further configured to adjust, for the terminal device, a second time window based on the determined periodicities, where the second time window is used by the terminal device to receive the downlink common signals from the second network device at the frequency in the second frequency set. The receiver 1210 may be further configured to receive, at a second frequency by using the adjusted second time window, one or more groups of downlink common signals that are not received by the terminal device in the plurality of groups of downlink common signals. In this way, the downlink common signals with the different periodicities from the neighboring cell can be received.

In some embodiments, the receiver 1210 may be further configured to receive the downlink common signals from the second network device at the frequency in the second frequency set by using the second time window. The processor 1220 may be further configured to: in response to receiving the downlink common signals from the second network device at the second frequency in the second frequency set, determine whether to adjust the second time window. In this way, whether to adjust the second time window is determined only at the second frequency at which the second network device sends the downlink common signals, so that impact of the adjustment of the second time window on a latency (for example, a latency of cell measurement) of application of the downlink common signals is improved.

In some embodiments, the first system information may further include a second parameter set, and the second parameter set indicates a condition for adjusting the second time window. In these embodiments, the processor 1220 may be configured to: determine, based on the second parameter set, whether the condition for adjusting the second time window is met; and if the condition for adjusting the second time window is met, determine to adjust the second time window. In this way, impact of the adjustment of the second time window on a latency (for example, a latency of cell measurement) of application of the downlink common signals can be further improved.

In some embodiments, the second system information may further include a third parameter set, and the third parameter set indicates a condition for adjusting the second time window. In these embodiments, the processor 1220 may be configured to: determine, based on the third parameter set, whether the condition for adjusting the second time window is met; and if the condition for adjusting the second time window is met, determine to adjust the second time window. In this way, impact of the adjustment of the second time window on a latency (for example, a latency of cell measurement) of application of the downlink common signals can be further improved.

In some embodiments, the processor 1220 may be configured to adjust the second time window by setting the second time window for the second frequency to a maximum value in the periodicities of the plurality of groups of downlink common signals. In this way, it can be ensured that the plurality of groups of downlink common signals from the neighboring cell are received.

In some embodiments, the processor 1220 may be further configured to: in response to receiving the one or more groups of downlink common signals, stop receiving the downlink common signals from the second network device at the second frequency. In this way, overheads for receiving the downlink common signals from the neighboring cell can be reduced, and communication efficiency can be improved.

In some embodiments, the processor 1220 may be further configured to: measure the plurality of groups of received downlink common signals; and perform cell reselection based on a result of the measurement. In this way, cell selection can be efficiently and correctly implemented.

In some embodiments, the downlink common signal may include at least one of the following: a primary synchronization signal, a secondary synchronization signal, a physical broadcast channel signal, or a demodulation reference signal for a physical broadcast channel.

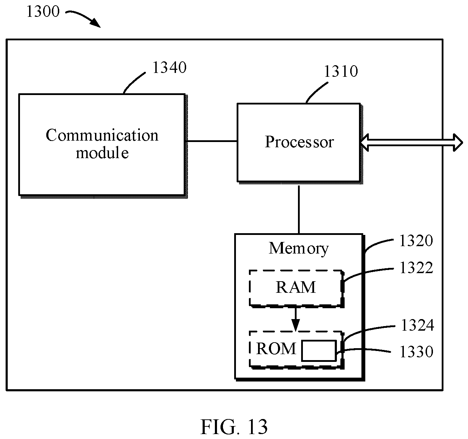

FIG. 13 is a simplified block diagram of a device 1300 suitable for implementing embodiments of the present disclosure. The device 1300 may be provided to implement a network device or a terminal device, for example, any one of the network devices 110 and 120 and the terminal device 130 shown in FIG. 1. As shown in the figure, the device 1300 includes one or more processors 1310, one or more memories 1320 coupled to the processor 1310, and one or more communication modules 1340 coupled to the processor 1310.

The communication module 1340 is configured to perform bidirectional communication. The communication module 1340 has a communication interface for the communication. The communication interface may be any interface necessary to communicate with another network element.

The processor 1310 may be any type suitable for a native technology network, and as a limiting example, may include one or more of the following: a general-purpose computer, a dedicated computer, a microprocessor, a digital signal processor, and a processor that is based on a multi-core processor architecture. The device 1300 may have a plurality of processors, such as an application-specific integrated circuit chip, which in time belongs to a clock synchronized with a main processor.

The memory 1320 may include one or more nonvolatile memories and one or more volatile memories. Examples of the nonvolatile memory include but are not limited to a read-only memory (ROM) 1324, an electrically programmable read-only memory (EPROM), a flash memory, a hard disk, an optical disc (CD), a digital video disk (DVD), and another magnetic storage and/or optical storage apparatus. Examples of the volatile memory include but are not limited to a random access memory (RAM) 1322 and another volatile memory that does not persist during power-off duration.

A computer program 1330 includes computer-executable instructions performed by the associated processor 1310. The program 1330 may be stored in the ROM 1320. The processor 1310 may perform any suitable action and processing by loading the program 1330 into the RAM 1320.

Embodiments of the present disclosure may be implemented by using the program 1330, so that the device 1300 performs the processing in the present disclosure as discussed with reference to FIG. 3 to FIG. 8. The device 1300 may be corresponding to the network device 1100 or the terminal device 1200, and a functional module in the network device 1100 or the terminal device 1200 may be implemented by using software of the device 1300. In other words, a functional module included in the network device 1100 or the terminal device 1200 is generated after the processor 1310 of the device 1300 reads program code stored in the memory 1320. Embodiments of the present disclosure may alternatively be implemented by using hardware or a combination of software and hardware.

In some embodiments, the program 1330 may be tangibly included in a computer-readable medium, and the computer-readable medium may be included in the device 1300 (for example, in the memory 1320) or another storage device that is accessible by the device 1300. The program 1330 may be loaded from the computer-readable medium to the RAM 1322 for execution. The computer-readable medium may include any type of tangible nonvolatile memory, for example, a ROM, an EPROM, a flash memory, a hard disk, a CD, or a DVD.

Usually, the various example embodiments of the present disclosure may be implemented in hardware or dedicated circuits, software, logic, or any combination thereof. Some aspects may be implemented in hardware, while other aspects may be implemented in firmware or software that may be executed by a controller, a microprocessor, or another computing device. When the aspects of embodiments of the present disclosure are illustrated or described as block diagrams, or flowcharts, or represented using some other figures, it is understood that the blocks, apparatuses, systems, technologies, or methods described herein may be implemented as nonlimiting examples in hardware, software, firmware, dedicated circuits or logic, general-purpose hardware or controllers, or other computing devices, or some combination thereof. Examples of a hardware device that may be used to implement embodiments of the present disclosure include but are not limited to a field programmable gate array (FPGA), an application-specific integrated circuit (ASIC), an application-specific standard product (ASSP), a system-on-chip (SoC), and a complex programmable logic device (CPLD).

In an example, embodiments of the present disclosure may be described in the context of machine-executable instructions. For example, the machine-executable instructions are included in a program module executed in a device on a target real or virtual processor. Usually, the program module includes a routine, a program, a library, an object, a class, a component, a data structure, and the like, and executes a specific task or implements a specific abstract data structure. In the embodiments, functions of program modules may be combined or split between the described program modules. The machine-executable instructions for the program module may be executed locally or within a distributed device. In the distributed device, the program module may be located in both a local storage medium and a remote storage medium.

Computer program code used for implementing the method in the present disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of the present disclosure, the computer program code or related data may be carried in any proper carrier, so that the device, the apparatus, or the processor can perform various processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores programs used for or related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any proper combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any proper combination thereof.

In addition, although the operations are described in a particular sequence, this should not be understood as requiring the operations to be completed in the particular sequence shown or in a sequential order, or performing all of the illustrated operations to obtain a desired result. In some cases, multitasking or parallel processing is beneficial. Likewise, although the discussion above includes some specific implementation details, this should not be construed as a limitation on the scope of any invention or claim, but rather as descriptions of particular embodiments that may be directed to a particular invention. Some features described in the context of separate embodiments in this specification may also be incorporated and implemented in a single embodiment. Conversely, various features described in the context of a single embodiment may also be implemented separately in a plurality of embodiments or in any suitable sub-combination.

Although the subject matter has been described in language specific to structural features and/or methodological actions, it should be understood that the subject matter defined in the appended claims is not limited to the specific features or actions described above. Rather, the specific features and actions described above are disclosed as example forms of implementing the claims.

## Claims

1. A short-range wireless communication method, comprising:
generating, by a receiving device, a feedback frame in response to receiving of a data frame, wherein the feedback frame comprises first indication information, the first indication information is obtained after the receiving device encodes an access code of a sending device in the data frame, the first indication information indicates whether the data frame is correctly received, and the first indication information is indicated in a part other than a packet header field and a data field in the feedback frame; and
sending the feedback frame to the sending device.

2. The method according to claim 1, wherein the generating a feedback frame comprises:
performing cyclic redundancy check on the received data frame;
encoding the access code in the data frame based on a check result, to generate the first indication information; and
generating the feedback frame based on the first indication information.

3. The method according to claim 2, wherein the encoding the access code in the data frame based on a check result, to generate the first indication information comprises:
dividing the access code into a plurality of subcode segments;
determining a group of first target bits based on the check result, wherein a reference bit in the first target bits corresponds to a subcode segment in the plurality of subcode segments;
encoding the corresponding subcode segment in the plurality of subcode segments by using a first target bit in the group of first target bits; and
generating the first indication information based on a plurality of encoded subcode segments.

4. The method according to claim 3, wherein the encoding the corresponding subcode segment in the plurality of subcode segments by using a first target bit in the group of first target bits comprises:
performing encoding by performing a logical operation on the corresponding subcode segment in the plurality of subcode segments by using the first target bit in the plurality of first target bits.

5. The method according to claim 3, wherein the determining a group of first target bits based on the check result comprises:
obtaining a plurality of groups of reference bits; and
in response to determining, based on the check result, that the data frame is correctly received, determining, as the group of first target bits, first reference bits that correspond to the plurality of groups of reference bits and are correctly received.

6. The method according to claim 3, wherein the determining a group of first target bits based on the check result comprises:
obtaining a plurality of groups of reference bits; and
in response to determining, based on the check result, that the data frame is incorrectly received, determining, as the group of first target bits, second reference bits that correspond to the plurality of groups of reference bits and are incorrectly received.

7. The method according to claim 1, further comprising:
receiving, by the receiving device, a retransmitted data frame from the sending device;
obtaining second indication information from the retransmitted data frame, wherein the second indication information is obtained after the sending device encodes the access code of the sending device in the retransmitted data frame, and the second indication information indicates whether packet header information in the retransmitted data frame is consistent with packet header information in the previously received data frame; and
determining a data merging possibility of the retransmitted data frame and the data frame based on the second indication information.

8. The method according to claim 7, wherein the determining a data merging possibility comprises:
determining a group of second target bits by decoding the second indication information, wherein the second indication information is obtained after the sending device encodes the access code by using the group of second target bits;
determining, based on the group of second target bits, whether the packet header information in the retransmitted data frame is changed; and
if it is determined that the packet header information is changed, determining that data in the retransmitted data frame is not merged with data in the previously received data frame.

9. The method according to claim 8, further comprising:
if it is determined that the packet header information is not changed, determining that data in the retransmitted data frame is merged with data in the previously received data frame.

10. The method according to claim 1, wherein the sending the feedback frame comprises:
if it is determined that the data frame is received on a downlink from the sending device to the receiving device, sending the feedback frame on an uplink from the receiving device to the sending device.

11. The method according to claim 1, wherein the sending the feedback frame comprises:
sending the feedback frame at a time interval specially for sending the feedback frame.

12. A short-range wireless communication method, comprising:
receiving, by a sending device from a receiving device, a feedback frame for a data frame, wherein the feedback frame comprises first indication information, the first indication information is obtained after the receiving device encodes an access code of the sending device in the data frame, the first indication information indicates whether the data frame is correctly received, and the first indication information is indicated in a part other than a packet header field and a data field in the feedback frame; and
determining, based on the first indication information, correctness of receiving the data frame by the receiving device.

13. The method according to claim 10, wherein the determining correctness of receiving the data frame comprises:
determining a group of first target bits by decoding the first indication information, wherein the first indication information is obtained after the receiving device encodes the access code by using the group of first target bits; and
determining, based on the group of first target bits, the correctness of receiving the data frame by the receiving device.

14. The method according to claim 11, further comprising:
if it is determined that the data frame is incorrectly received by the receiving device, sending a retransmitted data frame to the receiving device, wherein the retransmitted data frame comprises second indication information, the second indication information is obtained after the sending device encodes the access code of the sending device in the retransmitted data frame, and the second indication information indicates whether packet header information in the retransmitted data frame is consistent with packet header information in the previously received data frame.

15. The method according to claim 14, further comprising:
if it is determined that the data frame is incorrectly received by the receiving device, determining a group of second target bits;
generating the second indication information by encoding the access code by using the group of second target bits; and
generating the retransmitted data frame based on the second indication information.

16. The method according to claim 14, wherein the sending a retransmitted data frame comprises:
if it is determined that the feedback frame is received on an uplink from the receiving device to the sending device, sending the retransmitted data frame on a downlink from the sending device to the receiving device.

17. The method according to claim 14, wherein the sending a retransmitted data frame comprises:
sending the retransmitted data frame at another time interval other than the time interval specially for sending the feedback frame.

18. A short-range wireless communication device, comprising:
a transceiver and a processor coupled to the transceiver, wherein
the processor is configured to perform the method according to any one of claims 1 to 11.

19. A short-range wireless communication device, comprising:
a transceiver and a processor coupled to the transceiver, wherein
the processor is configured to perform the method according to any one of claims 12 to 17.

20. A sending device, comprising:
a processor, configured to generate a feedback frame in response to receiving of a data frame, wherein the feedback frame comprises first indication information, the first indication information is obtained after a receiving device encodes an access code of the sending device in the data frame, the first indication information indicates whether the data frame is correctly received, and the first indication information is indicated in a part other than a packet header field and a data field in the feedback frame; and
a transceiver, coupled to the processor, and configured to send the feedback frame to the sending device.

21. A receiving device, comprising:
a processor, configured to determine, based on first indication information, correctness of receiving a data frame by the receiving device; and
a transceiver, coupled to the processor, and configured to receive, from the receiving device, a feedback frame for the data frame, wherein the feedback frame comprises first indication information, the first indication information is obtained after the receiving device encodes an access code of a sending device in the data frame, the first indication information indicates whether the data frame is correctly received, and the first indication information is indicated in a part other than a packet header field and a data field in the feedback frame.

22. A computer-readable storage medium, wherein the computer-readable storage medium stores computer-executable instructions, and when the computer-executable instructions are executed by a processor, the processor is enabled to perform the method according to any one of claims 1 to 11 or the method according to any one of claims 12 to 17.
